# EUROPEAN PATENT APPLICATION

(11) **EP 1 986 088 A2**
(43) Date of publication of application: **29.10.2008**
(21) Application number: 08155018.8
(22) Date of filing: 23.04.2008
(51) Int. Cl.: G06F 3/048

(54) **Method and system for navigating electronic documents using an electronic device**

(30) Priority: 23.04.2007 US 738657
(71) Applicant: Xerox Corporation, Rochester, New York 14644 (US)
(72) Inventor: Porter III, Gilbert B., Rochester, NY 14610 (US)
(74) Representative: Grünecker, Kinkeldey, Stockmair & Schwanhäusser Anwaltssozietät

(57) **Abstract**

A method of navigating an electronic document using an electronic device may include obtaining, by the electronic device, an electronic document having one or more navigation elements, and, for each navigation element, automatically generating a corresponding code. The electronic document may be displayed on a display area of the electronic device. An overlay for each code may be automatically inserted into the electronic document such that each navigation element may be displayed with its corresponding code. Each navigation element may then be linked to an input element or combination of input elements of the electronic device. A selection of at least one input element may be received, and a target represented by the navigation element corresponding to the selected input element may be displayed.

## Description

### BACKGROUND

Electronic devices such as cellular phones and personal digital assistants (PDAs) are fast becoming necessities, especially for people on the move. Electronic devices can be used to place phone calls, to text messages, to browse the Internet, to take pictures and the like. The display area on an electronic device can be limited due to its size, but the display area is usually adequate for viewing pictures or displaying text, such as personal photographs or contact information. Electronic devices typically include means for scrolling through text, such as pressing keys located on the device's keypad, a tracking wheel or other buttons located on the device.

However, a major limitation of conventional electronic devices is that they lack a simple equivalent of a mouse. As such, navigating web pages or other documents that include hyperlinks, or other mouse-sensitive areas, using an electronic device is difficult.

Improved systems and methods for navigating electronic documents using an electronic device would be desirable.

### SUMMARY

Before the present methods are described, it is to be understood that this invention is not limited to the particular systems, methodologies or protocols described, as these may vary. It is also to be understood that the terminology used herein is for the purpose of describing particular embodiments only, and is not intended to limit the scope of the present disclosure which will be limited only by the appended claims.

It must be noted that as used herein and in the appended claims, the singular forms "a," "an," and "the" include plural reference unless the context clearly dictates otherwise. Thus, for example, reference to a "code" is a reference to one or more codes and equivalents thereof known to those skilled in the art, and so forth. Unless defined otherwise, all technical and scientific terms used herein have the same meanings as commonly understood by one of ordinary skill in the art. As used herein, the term "comprising" means "including, but not limited to."

In an embodiment, a method of navigating an electronic document using a mobile device may include obtaining, by the mobile device, an electronic document having one or more navigation elements, and, for each navigation element, automatically generating a corresponding code. The electronic document may be displayed on a display area of the mobile device such that each navigation element may be displayed with its corresponding code. Each navigation element may then be linked to an input element or combination of input elements of the electronic device. A selection of at least one input element may be received, and a landing page represented by the navigation element corresponding to the selected input element may be displayed.

In an embodiment, a method of navigating an electronic document using an electronic device may include obtaining, by the electronic device, an electronic document having one or more navigation elements, and, for each navigation element, automatically generating a corresponding code. The electronic document may be displayed on a display area of the electronic device. An overlay for each code may be automatically inserted into the electronic document such that each navigation element may be displayed with its corresponding code. Each navigation element may then be linked to an input element or combination of input elements of the electronic device. A selection of at least one input element may be received, and a target represented by the navigation element corresponding to the selected input element may be displayed.
In a further embodiment receiving a selection of at least one input element further comprises:
determining whether a navigation key has also been activated. In a further embodiment displaying a target comprises:
   automatically displaying the target when the code corresponding to the navigation element is received.
In a further embodiment displaying a target comprises displaying the target after a specified period of time has elapsed from receiving the code corresponding to the navigation element.
In a further embodiment inserting an overlay comprises highlighting the navigation element with one or more of the following: a color, a texture, a shape and a shading.
In a further embodiment inserting an overlay comprises displaying the navigation element in a specified color.
In a further embodiment the electronic device is portable.
In a further embodiment the electronic device is a printer.
In a further embodiment obtaining an electronic document comprises receiving
an electronic document via a wireless network.

In another embodiment, an electronic device for navigating an electronic document may include a processor and a processor-readable storage medium in communication with the processor. The processor-readable storage medium may include one or more instructions for navigating an electronic document using the electronic device. This method may include obtaining, by the electronic device, an electronic document having one or more navigation elements, and, for each navigation element, automatically generating a corresponding code. The electronic document may be displayed on a display area of the electronic device. An overlay for each code may be automatically inserted into the electronic document such that each navigation element may be displayed with its corresponding code. Each navigation element may then be linked to an input element or combination of input elements of the electronic device. A selection of at least one input element may be received, and a target represented by the navigation element corresponding to the selected input element may be displayed.

### BRIEF DESCRIPTION OF THE DRAWINGS

FIG. 1 depicts an exemplary electronic device displaying an electronic document having navigation elements according to an embodiment.

FIG. 2 depicts an exemplary electronic device displaying an electronic document having number-coded navigation elements according to an embodiment.

FIG. 3 depicts an exemplary electronic device displaying an electronic document having color-coded navigation elements according to an embodiment.

FIG. 4 depicts an exemplary electronic device displaying an electronic document having number-coded and color-coded navigation elements according to an embodiment.

FIG. 5 depicts an exemplary flow chart that provides an overview of a method for navigating electronic documents using an electronic device according to an embodiment.

### DETAILED DESCRIPTION

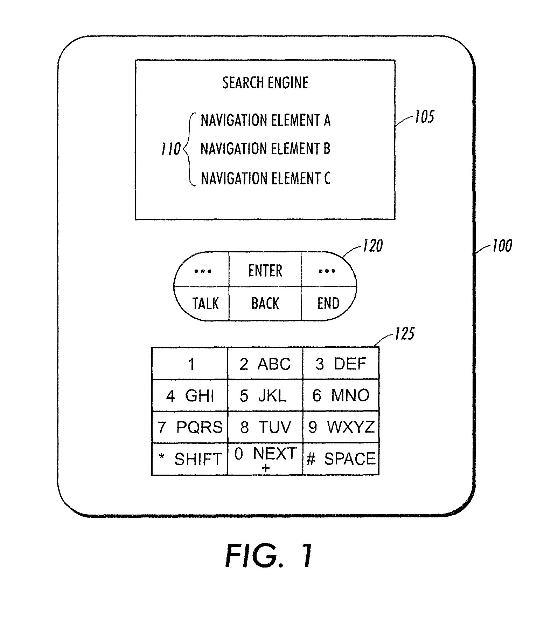

Electronic devices may be used to display electronic documents. Electronic devices may include mobile or portable devices such as cellular phones, PDAs, media players or the like. Electronic devices may also include other types of devices such as printers or copiers that have a user interface or other similar electronic devices having user interfaces. An electronic device may have a processor and a processor-readable storage medium in communication with the processor. As illustrated in FIG. 1, an electronic device **100** may be used to display electronic documents on the device's display area **105.**

An electronic document may include a web page, a document, a photograph, a document stored in a portable document format or other similar document that contains at least one navigation element.

A navigation element may be an automated cross-reference to a target, which may be a displayable document or landing page. For example, a navigation element may be a hyperlink, an image or any other display element that is linked to a target.

A target may be a resource of displayable information suitable for transmission over a communication network such as the Internet and accessible through a software application such as a web browser. For example, a target may be an HTML web page, an XML web page, a landing page, a word processing document, or any similar document.

As depicted in FIG. 1, a user may use an electronic device **100** to access a search engine target. After a query is entered, the search engine may display a list of results in the form of navigation elements **110.** Although FIG. 1 only depicts three navigation elements, additional or fewer navigation elements may be displayed. The electronic device may also include a display screen **105** that displays the target, and one or more input devices, such as push buttons **120,** an alphanumeric keypad **125,** scroll wheel, click wheel, trackball, pointer or other device. It will be apparent to one of ordinary skill in the art that the disclosed methods and systems can be applied to both stationary and portable electronic devices, including those possessing a mouse or other conventional input device.

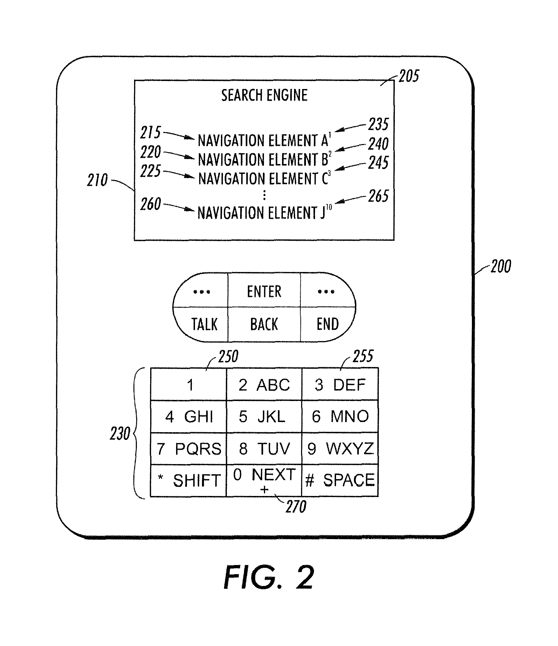

In an embodiment, a user may access a target by using an electronic device's keypad. FIG. 2 depicts a target **205** that may be displayed on the display area **210** of a device **200.** The target **205** illustrated in FIG. 2 lists results to a search engine query with the results including navigation elements to other web pages. Specifically illustrated are navigation elements A **215,** B **220**, C **225** and J **260.** Although a web page **205** is used as an example, it is understood that any electronic document, such as other web pages, portable document format documents, word processing documents, or other electronic documents containing at least one navigation element may be navigated by a device **200** based on the teachings of the present disclosure.

In an embodiment, as illustrated by FIG. 2, the navigation elements may be displayed with a corresponding code. The code may include one or more numbers, letters, colors, symbols, textures, shapes, shading or the like, that correspond to one or more labeled keys (e.g., **250, 255** and **270)** on the keypad **230** of the device **200.** For example, as shown in FIG. 2, the codes may be represented by numbers, specifically the numbers '1' **235,** '2' **240,** '3' **245** and '10' **265.** The code may be automatically generated by the web browser or a software application associated with the device **200** and displayed as an overlay on the electronic document. For example, the web browser of the device **200** may overlay a code in every location in the electronic document where a navigation element exists. As a result, the navigation elements in an electronic document may be displayed as illustrated in FIG. 2.

In an embodiment, a user may access a specific navigation element by pressing one or more keys on the keypad **230** that are associated with a code for a navigation element. For example, if a user wants to access the target associated with Navigation Element A **215,** the user may press the number '1' key **250** on the device **200** because the code associated with Navigation Element A **215** is '1' **235.** Likewise, if the user wants to access the target associated with Navigation Element C **225,** the user may press the number '3' **255** key on the device because the code associated with navigation element C **225** is '3' **245.** In an embodiment, a cursor on the display area **210** of the device **200** may move to a selected Navigation Element once a corresponding key is pressed. For example, if the user wants to access the target associated with Navigation Element A **215,** the user may press the number '1' key **250** on the device **200.** After the user presses the '1' key **250,** the cursor on the display area **210** may move to the location at which Navigation Element A **215** is located.

In an embodiment, multiple keys may be pressed to access the desired navigation element. For example, to select Navigation Element J **260,** the user may press the '1' key **250** followed by the '0' key **270** because '10' is the code **265** associated with Navigation Element J **260.** When the user presses the first key, the cursor may move to the region represented by the code on the pressed key. For example, a user who wants to access Navigation Element J **260** may first press the '1' key **250.** At this point, the cursor may move to Navigation Element A **215** because Navigation Element A **215** is associated with the code 'I' **235.** When the user presses the '0' key **270,** however, the cursor may jump to Navigation Element J **260** because Navigation Element J **260** is associated with the code '10'.

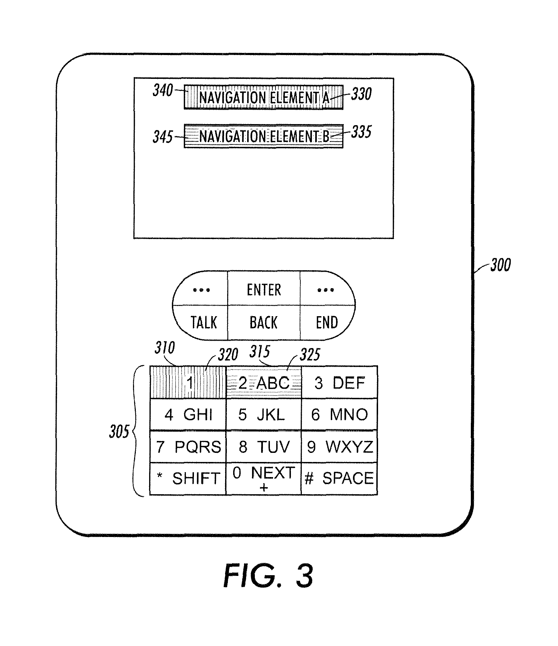

In an embodiment, the code may be a specific color. A user may access a navigation element by pressing a key on the device's keypad that is associated with the color of the navigation element. For example, as illustrated in FIG. 3, navigation elements may be color coded. The navigation element text may be shaded a particular color, the navigation element may be highlighted with a transparent color or the like. For example, in FIG. 3, Navigation Element A **330** may be shaded red, represented in FIG. 3 by vertical lines **340,** while Navigation Element B **335** may be shaded blue, represented in FIG. 3 by horizontal lines **345.** In addition, the keys on a keypad **305** of a device **300** may include colors. For example, one or more keys on the keypad **305** may each include a colored dot, be a certain color, or the like.

As illustrated in FIG. 3, each of the keys on the keypad **305** may be shaded a different color. For example, the '1' key **310** may be shaded red, represented in FIG. 3 by vertical lines **320,** and the '2' key **315** may be shaded blue, represented in FIG. 3 by horizontal lines **325.** In an embodiment, a user may access a specific navigation element by pressing the key on the keypad **305** that is associated with the color of the navigation element. For example, if a user wants to access the target associated with Navigation Element A **330,** the user may press the number '1' key **310** on the device **300** because the color associated with Navigation Element A **330** is red. Likewise, if the user wants to access the target associated with Navigation Element B **335,** the user may press the number '2' **315** key on the device **300** because the color associated with Navigation Element B **335** is blue.

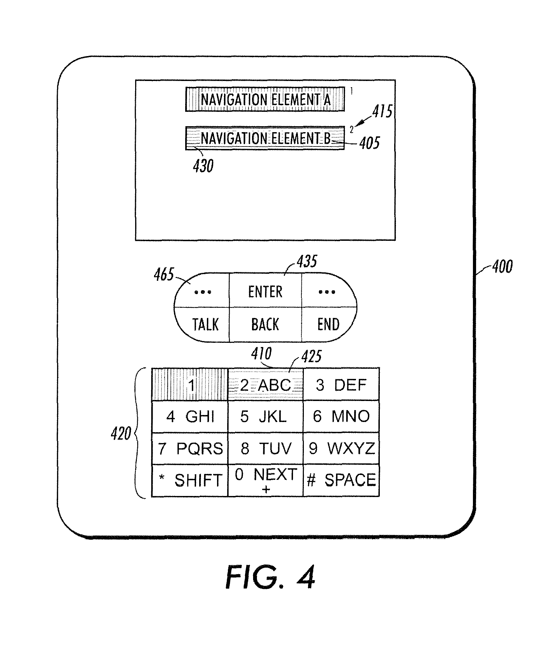

In an embodiment, navigation elements may include a combination of codes. For example, as illustrated in FIG. 4, the navigation elements may be displayed with a numerical code and a color code. If a user wants to select Navigation Element B **405,** the user may press the '2' key **410** on the keypad **420** because '2' is the code **415** associated with Navigation Element B **405.** Alternatively, the user may select Navigation Element B **405** by pressing the '2' key **410** on the keypad because the '2' key **410** is shaded blue, represented in FIG. 4 by horizontal lines **425,** and Navigation Element B **405** is color coded blue, represented in FIG. 4 by horizontal lines **430.**

Optionally, the device may include keys that are dedicated to navigation elements. Alternatively, one or more keys may have other functions. In the latter embodiment, the system may use any now or hereinafter known methods or devices to distinguish target navigation from telephone number dialing or other functions. Such methods and devices may include, for example: (i) requiring the user to press and hold a key for a predetermined length of time in order to trigger a navigation function; (ii) including a function key **465** or other input device that, when activated, alerts the device that the previous or next key activation should be used to trigger an activation function; or (iii) other devices.

In an embodiment, the target associated with the selected navigation element may be displayed after the appropriate code is received from a user. For example, if a user presses '2' **410,** the target associated with Navigation Element B **405** may be displayed. In an embodiment, the target may be displayed after a specified delay period. For example, if the specified delay period is two seconds, the target associated with Navigation Element B **405** may be displayed two seconds after a user presses '2' **410.** A longer or shorter delay period may be used within the scope of this disclosure as will be apparent to one of ordinary skill in the art.

Alternatively, the target associated with the selected navigation element may be displayed after confirmation is received from a user. For example, in an embodiment, after the user selects a navigation element by pressing one or more keys on the device's keypad **420** that correspond to the navigation element's code, the cursor may move to the selected navigation element. The user may then access the associated target by pressing a confirmation key, such as the 'Enter' key, the 'OK' key, the 'Select' key or the like. After the user presses a confirmation key, the target may be displayed on the device **400.** For example, if a user presses '2' **410,** the cursor may move to the location of Navigation Element B **405.** The user may then press the 'Enter' key **435** to select Navigation Element B **405.**

In an embodiment, coding navigation elements may be an optional feature that a user may turn on or off. When the feature is turned on, all navigation elements may be displayed with a code that a user may select using the device's keypad to more easily navigate electronic documents. When the feature is turned off, however, electronic documents may be displayed in the usual manner without numerical codes, color codes or the like.

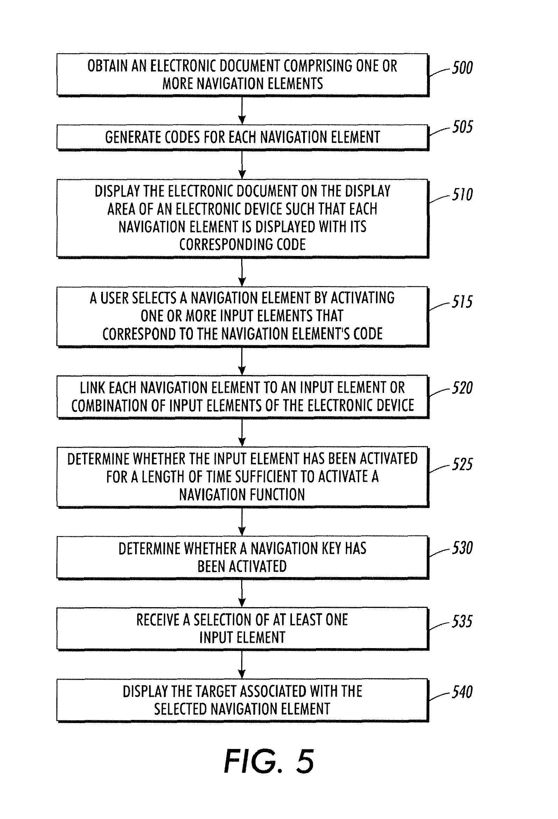

FIG. 5 depicts an exemplary flow chart that provides an overview of a method for navigating electronic documents using an electronic device according to an embodiment. The device may obtain **500** an electronic document via a wireless network, from a software application on the device, from memory or the like. The device's web browser or an associated application may also generate **505** codes corresponding to each navigation element in the electronic document. The electronic document may be displayed **510** on the device such that the navigation elements are displayed with their corresponding codes. A user may then select **515** a navigation element by activating one or more input elements such as pressing one or more keys on the device that correspond to the code for the navigation element. The navigation element may be linked **520** to the input element or combination of input elements of the electronic device. It may be determined **525** whether the input element has been activated for a length of time sufficient to activate a navigation function and/or whether a navigation key has been activated **530.** A selection of at least one input element may be received **535** and a target represented by the navigation element corresponding to the selected input element may be displayed **540.**

## Claims

1. A method of navigating an electronic document using a mobile device, the method comprising:
obtaining by a mobile device, an electronic document having one or more navigation elements;
for each navigation element, automatically generating a corresponding code;
displaying the electronic document on a display of the mobile device, wherein each navigation element is displayed with its corresponding code;
linking each navigation element to an input element or combination of input elements of the mobile device;
receiving a selection of at least one input element; and
displaying a landing page represented by the navigation element corresponding to the selected input element.

2. The method of claim 1, wherein generating a corresponding code comprises generating one or more of the following: a number, a letter, a symbol, a color, a texture, a shape and a shading.

3. The method of claim 1, wherein receiving a selection of at least one input element comprises:
receiving an indication that a key on the mobile device has been activated.

4. The method of claim 1, wherein receiving a selection of at least one input element further comprises:
determining whether the input element has been activated for a length of time sufficient to activate a navigation function.

5. The method of claim 1, wherein receiving a selection of at least one input element further comprises:
determining whether a navigation key has also been activated.

6. The method of claim 1, wherein displaying a landing page comprises:
automatically displaying the landing page when the code corresponding to the navigation element is received.

7. The method of claim 1, wherein displaying a landing page comprises displaying the landing page after a specified period of time has elapsed from receiving the code corresponding to the navigation element.

8. The method of claim 1, wherein displaying the electronic document comprises:
identifying the one or more navigation elements; and
for each navigation element, automatically inserting an overlay for the corresponding code into the electronic document.

9. The method of claim 8, wherein inserting an overlay comprises highlighting the navigation element with one or more of the following: a color, a texture, a shape and a shading.

10. The method of claim 8, wherein inserting an overlay comprises displaying the navigation element in a specified color.

11. The method of claim 1, wherein obtaining an electronic document comprises receiving an electronic document via a wireless network.

12. A method of navigating an electronic document using an electronic device, the method comprising:
obtaining, by an electronic device, an electronic document having one or more navigation elements;
for each navigation element, automatically generating a corresponding code;
displaying the electronic document on a display of the electronic device, wherein for each navigation element, an overlay for the corresponding code is automatically inserted into the electronic document and wherein each navigation element is displayed with its corresponding code;
linking each navigation element to an input element or combination of input elements of the electronic device;
receiving a selection of at least one input element; and
displaying a target represented by the navigation element corresponding to the selected input element.

13. The method of claim 12, wherein generating a corresponding code comprises generating one or more of the following: a number, a letter, a symbol, a color, a texture, a shape and a shading.

14. The method of claim 12, wherein receiving a selection of at least one input element comprises:
receiving an indication that a key on the electronic device has been activated.

15. The method of claim 12, wherein receiving a selection of at least one input element further comprises:
determining whether the input element has been activated for a length of time sufficient to activate a navigation function..
